# EUROPÄISCHE PATENTANMELDUNG

(11) **EP 1 719 795 A1**
(43) Veröffentlichungstag der Anmeldung: **08.11.2006**
(21) Anmeldenummer: 05008018.3
(22) Anmeldetag: 13.04.2005
(51) Int. Cl.: C08K 5/00, C08K 5/521, C08G 77/395

(54) **Umsetzungsprodukte von Phosphonoestern mit Alkoholen oder Aminen**

(71) Anmelder: Huntsman Textile Effects (Germany) GmbH, 86462 Langweid (DE)
(72) Erfinder: Chrobaczek, Harald, Dr., 86153 Augsburg (DE); Dermeik, Salman, Dr., 86157 Augsburg (DE); Niederstadt, Rule, 86157 Augsburg (DE); Schöning, Kai-Uwe, Dr., 4104 Oberwil (CH); Rau, Udo, Dr., 38173 Dettum (DE); Cicek, Hasan, 37037 Göttingen (DE)

(57) **Zusammenfassung**

Phosphonoverbindungen, welche Carbonsäureestergruppen enthalten, werden mit Alkoholen oder Aminen umgesetzt. Die Umsetzung kann durch chemische Verbindungen oder durch Enzyme katalysiert werden.
Die erhaltenen Phosphorverbindungen lassen sich je nach ihrer Struktur zur Herstellung von Polymeren, zur Umsetzung mit Hydridosiloxanen, zur Bindung an Cellulose oder Wolle verwenden und zur Herstellung von Produkten mit flammhemmenden Eigenschaften verwenden.

## Beschreibung

Die Erfindung betrifft Phosphorverbindungen, welche sich ausgehend von bestimmten Phosphonoestern durch Umsetzung mit bestimmten Alkoholen oder Aminen herstellen lassen. Sie betrifft ferner Phosphorverbindungen, welche hieraus erhalten werden können durch weitere chemische Umsetzungen mit speziellen Produkten oder durch Polymerisation.

Ester von Phosphonocarbonsäuren sind bekannt und finden vielfach Verwendung. Ein Beispiel für eine Verwendung ist der Flammschutzsektor, wo unter anderem N-Methyloldialkylphosphono-propionamid als flammhemmendes Mittel für Cellulosetextilien zum Einsatz kommt.
Es bestand jedoch ein Bedürfnis, die bestehende Palette von Phosphonoverbindungen zu erweitern, um dadurch neue Einsatzmöglichkeiten zu erschließen.

Die Aufgabe, welche der vorliegenden Erfindung zugrundelag, bestand darin, neue Phosphorverbindungen zur Verfügung zu stellen, welche sich gut für verschiedene Einsatzzwecke eignen, z.B. für die Herstellung polymerer Phosphonoverbindungen oder für die Umsetzung mit Polyhydridoorganosiloxanen oder für die Anbindung an Artikel aus natürlichen Polymeren wie Cellulose- oder Wollematerialien.

Die Aufgabe wurde gelöst durch Phosphorverbindungen, welche herstellbar sind durch Umsetzung von Phosphonoestern der Formel (I) oder der Formel (II) oder von einem Gemisch von Phosphonoestern der Formel (I) und der Formel (II) 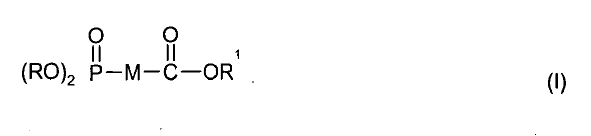 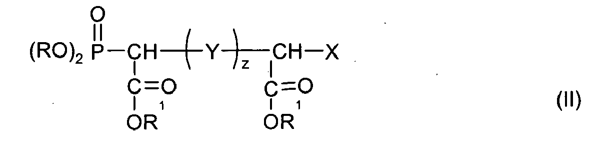 mit Alkoholen der Formel (III) oder Aminen der Formel (IV) oder einem Gemisch von Alkoholen der Formel (III) oder einem Gemisch von Aminen der Formel (IV)

R²-OH (III)

(R³)₂NH (IV)

worin M für einen zweiwertigen gesättigten, linearen oder verzweigten Alkylenrest mit 1 bis 4 Kohlenstoffatomen, vorzugsweise für -CH₂-CH₂- oder für -CH₂-CH(CH₃)- steht,
worin X für H oder für 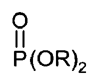 steht,
worin z=0 oder 1 ist und Y für einen Rest M steht oder für einen Rest M, in welchem ein Wasserstoffatom durch einen Rest 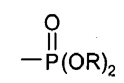 substituiert ist,
worin alle anwesenden Reste R unabhängig voneinander für eine Alkylgruppe mit 1 bis 4 Kohlenstoffatomen, vorzugsweise für -CH₃, stehen,
alle anwesenden Reste R¹ unabhängig voneinander für -CH₃ oder für -CH₂-CH₃ stehen,
worin R²-OH ein ein- oder mehrwertiger gesättigter oder ungesättigter Alkohol mit 2 bis 6 Kohlenstoffatomen oder Polyvinylalkohol ist
wobei alle anwesenden Reste R³ für R oder für H oder für
CH₂=C(R⁴)-CH₂-
stehen, jedoch höchstens einer der Reste R³ für H steht,
worin R⁴ für H oder für CH₃ steht.

Die genannten, erfindungsgemäßen Phosphorverbindungen besitzen vielfältige Verwendungsmöglichkeiten, wobei der jeweilige Einsatzzweck von der speziellen chemischen Struktur, insbesondere von der Art der Reste R² und R³ abhängen kann.

Eine bevorzugte Ausführungsform erfindungsgemäßer Phosphorverbindungen besteht darin, dass anschließend an die Umsetzung der Ester der Formel (I) oder Formel (II) mit Alkoholen oder Aminen die erhaltenen Produkte weiter umgesetzt werden, wobei diese weitere Umsetzung entweder
a) eine Umsetzung mit einem Polyorganosiloxan ist, das Si-H-Bindungen enthält, oder
b) eine radikalische Polymerisation ist, oder
eine Umsetzung mit Cellulosemolekülen ist, oder
eine Umsetzung mit Wollematerialien ist, oder
eine Umsetzung mit einem Alkohol der Formel (V) ist

R⁵-T-OH (V)

worin R⁵ ein einwertiger heterocyclischer Rest ist, der ein oder mehrere Stickstoffatome enthält und worin T für einen linearen oder verzweigten, gesättigten oder ungesättigten Kohlenwasserstoffrest mit 1 bis 4 Kohlenstoffatomen steht.

So sind z.B. die Produkte, die bei der Umsetzung von Verbindungen der Formel (I) und/oder der Formel (II) mit Verbindungen der Formel (III), in denen R² ein ungesättigter Rest ist, entstehen, gut geeignet zur Herstellung von Polymeren. Ein bevorzugtes Beispiel hierfür sind Produkte, die durch Umsetzung der Phosphonoverbindungen der Formel (I) und/oder Formel (II) mit (Meth)Allylalkohol entstehen. Diese Produkte enthalten noch C=C-Doppelbindungen, die eine radikalische Polymerisation ermöglichen. Wegen der Anwesenheit von Phosphor können die nach Polymerisation erhaltenen Produkte als polymere Flammschutzmittel dienen, z.B. als Flammschutzmittel für Textilien. Zweckmäßig ist es hierbei, die nach Umsetzung mit (Meth)Allylalkohol erhaltenen Produkte auf ein textiles Flächengebilde, z.B. ein Gewebe, aufzubringen, noch bevor Polymerisation stattgefunden hat. Die auf dem Gewebe vorliegenden Monomeren oder Oligomeren können anschließend, wenn gewünscht, unter Mitwirkung eines bekannten Radikalinitiators polymerisiert werden.
Eine weitere interessante Möglichkeit, die Produkte zu verwenden, welche nach der Umsetzung mit ungesättigten Alkoholen, z.B. mit (Meth)allylalkohol, entstehen, besteht darin, sie mit Polyorganosiloxanen ("H-Siloxanen") umzusetzen, welche Si-H-Bindungen enthalten. Hierbei addieren sich Si-H-Bindungen an Kohlenstoff-Kohlenstoff-Doppelbindungen. Die so erhaltenen Produkte lassen sich wiederum für die Behandlung von Fasermaterialien, z.B. textilen Flächengebilden in Form von Geweben, Maschenware oder nonwovens (Vliesen) verwenden. Sie können hierbei wiederum als polymere Flammschutzmittel dienen und gegebenenfalls zusätzlich weichen Griff vermitteln.
Wenn erfindungsgemäße Produkte oder Folgeprodukte davon für die Behandlung von Fasermaterialien, insbesondere von textilen Flächengebilden verwendet werden, so können sie in Form wässriger Lösungen oder Dispersionen hierfür eingesetzt werden. Sie können aber auch in Form von Lösungen in organischen Lösungsmitteln, z.B. N, N-Dialkylformamid eingesetzt werden. Zur Herstellung wässriger Dispersionen geeignete Dispergatoren sind dem Fachmann bekannt. Hierunter fallen handelsübliche oberflächenaktive Produkte wie ethoxilierte Alkohole, ethoxilierte Fettsäuren, ethoxilierte Fettamine und quaternäre Ammoniumsalze. Die Applikation der Produkte auf die textilen Flächengebilde kann nach allgemein bekannten Methoden im Zuge der Textilausrüstung bzw. -veredlung erfolgen, z.B. mittels Foulardierung. Die hierfür verwendeten wässrigen Lösungen oder Dispersionen können außerdem weitere Produkte enthalten, wie sie dem Fachmann für Textilausrüstung bekannt sind. Beispiele sind Weichgriffmittel und öl- bzw. wasserabweisende Mittel.

Erfindungsgemäße Produkte (oder wässrige Dispersionen oder Lösungen oder Lösungen in organischen Lösungsmitteln davon), die nach der Umsetzung von Phosphonoestern der Formel (I) und/oder der Formel (II) mit Alkoholen der Formel (III) entstehen, eignen sich gut für die Applikation auf textile Flächengebilde, welche Cellulose enthalten, z.B. Baumwollartikel. Zwar ist es gegebenenfalls auch möglich, für die Applikation auf Textilien direkt eine handelsübliche Verbindung der Formel (I) oder der Formel (II) zu verwenden. Vielfach ist es jedoch von Vorteil, den in handelsüblichen Phosphorverbindungen der Formel (I) oder der Formel (II) enthaltenen Rest R¹ durch einen Rest R² zu substituieren, was durch Umsetzung (Umesterung) mit einem Alkohol der Formel (III) erfolgen kann.

Die erfindungsgemäßen Phosphorverbindungen können zur Behandlung von Cellulose-, Baumwoll- oder Wollgewebe dienen. Hierbei ist es möglich, die Ausbildung einer chemischen Bindung zwischen dem Gewebe und der Phosphorverbindung wiederum durch Enzym zu katalysieren, z.B. durch eine Lipase, ein Subtilisin oder durch Transglutaminasen. Man kann beispielsweise so vorgehen, dass man eine wässrige Mikroemulsion aus Enzym, Phosphatpuffer und Tensid auf das Gewebe aufbringt, eine Trocknung durchgeführt und anschließend die Phosphorverbindung aus Wasser oder organischem Lösungsmittel appliziert.

Eine Reihe von Verbindungen der Formel (I) lassen sich durch die bekannte Addition von Dialkylphosphit an (Meth)Acrylsäureester CH₂=CH-COOR¹ oder CH₂=C(CH₃)-COOR¹ herstellen. Geeignete Methoden und Verfahrensbedingungen hierfür sind beschrieben in der US 2 754 320 und US 2 971 019. Weil Ester der Formel (I) nur mit bestimmten Resten R¹ auf dem Markt als Ausgangsverbindungen angeboten werden, kann es in einer Reihe von Fällen von Vorteil sein, den Rest R¹ durch Umsetzung (Umesterung) mit einem Alkohol R²-OH durch den Rest R² zu substituieren. Von R¹ verschiedene Reste R² können dann gegebenenfalls Vorteile bei der Ausrüstung von Cellulosetextilien bieten, z.B. hinsichtlich der Permanenz der Ausrüsteffekte. Nach der Applikation der genannten Produkte auf Cellulosematerialien kann durch chemische Reaktion (Umesterung) mit Hydroxygruppen der Cellulose eine chemische Bindung der Produkte an Cellulose erfolgen. Hierdurch lässt sich eine gute Permanenz der Ausrüsteigenschaften erzielen. Die chemische Reaktion zwischen den genannten Produkten und Cellulosemolekülen wird gegebenenfalls durch erhöhte Temperatur eingeleitet oder begünstigt. In jedem Fall aber ist es von Vorteil, die Umsetzung durch Verwendung eines Katalysators oder eines Gemischs von Katalysatoren zu erleichtern. Geeignete Katalysatoren sind dem Fachmann bekannt, nämlich übliche Veresterungs-/Umesterungskatalysatoren wie verdünnte Säuren. Weitere geeignete Katalysatoren werden unten genannt. Darunter befinden sich auch Enzyme.

Eine weitere Möglichkeit für die Verwendung erfindungsgemäßer Produkte ist die Umsetzung mit Wollematerialien. Die hierbei entstehenden Produkte sind ebenfalls erfindungsgemäße Produkte. Die Wollematerialien sind vorzugsweise textile Flächengebilde, z.B. Gewebe. Die Umsetzung wird vorzugsweise mit Produkten durchgeführt, welche aus Phosphonoestern der Formel (I) und/oder der Formel (II) durch Umsetzung mit Aminen der Formel (IV) herstellbar sind. Zur Ausbildung einer chemischen Bindung zwischen diesen Phosphorverbindungen und den Flächengebilden aus Wolle kann es wiederum vorteilhaft oder erforderlich sein, die Wolletextilien während oder nach der Applikation der Produkte zu erwärmen und/oder die Umsetzung zu katalysieren. Im übrigen kann die Applikation der Produkte auf textile Artikel aus Wolle nach Methoden erfolgen, welche für die Wolleausrüstung bekannt sind.

Eine weitere bevorzugte Ausführungsform erfindungsgemäßer Phosphorverbindungen besteht darin, zuerst eine Umsetzung von Phosphonoestern der Formel (I) und/oder der Formel (II) mit einem oder mehreren Alkoholen der Formel (III) durchzuführen und das erhaltene Produkt mit einem Alkohol der Formel (V) umzusetzen.

R⁵-T-OH (V)

### Hierbei bedeuten

R⁵ einen einwertigen heterocyclischen Rest, der ein oder mehrere Stickstoffatome als Ringatome enthält,
T einen linearen oder verzweigten, gesättigten oder ungesättigten zweiwertigen Kohlenwasserstoffrest mit 1 bis 4 Kohlenstoffatomen.
Eine bevorzugte Ausführungsform besteht darin, dass in Formel (V) der Rest R⁵ ein einwertiger Rest ist, der sich von Adenin (1 H-Purin-6-amin) durch Entfernung des Wasserstoffatoms ableitet, das sich an der Aminogruppe des 5-Rings befindet.
Durch die beschriebene Umsetzung mit Verbindungen der Formel (V) sind modifizierte Adenine zugänglich. Von Adenin(derivaten) ist bekannt, dass mit ihnen physiologische Effekte erzielt werden können.

Erfindungsgemäße Phosphorverbindungen lassen sich erhalten durch Umsetzung von Phosphonoestern der Formel (I) oder der Formel (II) 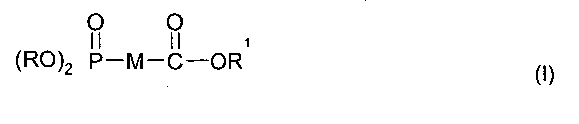 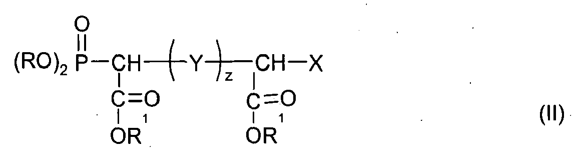 oder von Gemischen, welche mehrere Ester der Formel (I) und/oder der Formel (II) enthalten, mit Alkoholen der Formel (III) oder Aminen der Formel (IV)

R²-OH (III)

(R³)₂NH (IV)

oder mit einem Gemisch von Alkoholen der Formel (III) oder einem Gemisch von Aminen der Formel (IV). Weitere erfindungsgemäße Phosphorverbindungen lassen sich wie erwähnt herstellen, indem man die bei der genannten Umsetzung erhaltenen Produkte mit Polysiloxanen umsetzt, welche Si-H-Bindungen enthalten, oder mit Cellulosemolekülen oder mit Wollematerialien oder mit Alkoholen der Formel (V) umsetzt oder einer radikalischen Polymerisation unterwirft.
Die Phosphonoester der Formel (I), welche als Ausgangsmaterialien dienen können, lassen sich nach bekannten Methoden herstellen. Eine Möglichkeit besteht darin, Dialkylphosphite an α, β-ungesättigte Carbonsäureester zu addieren, welche in der Säurekomponente 3 oder 4 Kohlenstoffatome aufweisen. Besonders gut geeignet sind hierbei Acrylsäure- oder Methacrylsäureester. Solche Additionsreaktionen werden in den oben bereits genannten US-Patentschriften beschrieben.
Eine Reihe von Phosphonoestern der Formel (II) lassen sich für den Fall, dass X für ein Wasserstoffatom steht, nach der Lehre der US 2 754 319 herstellen.
Ester der Formel (II), bei denen X für 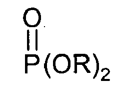 steht und z=0 ist, können erhalten werden durch Umsetzung von 2-Butin-1.4-dicarbonsäureestern mit Dialkylphosphit. In einem ersten Schritt erfolgt hierbei eine Addition der P-H-Bindung des Phosphits an die C≡C-Dreifachbindung, wordurch modifizierte Maleinsäureester oder Fumarsäureester entstehen, bei welchen an eines der Kohlenstoffatome der C=C-Doppelbindung eine Phosphonogruppe gebunden ist. In einem zweiten Schritt wird noch einmal eine P-H-Bindung eines zweiten Phosphitmoleküls an die entstandene C=C-Doppelbindung addiert, wodurch Verbindungen der Formel (II) mit X = 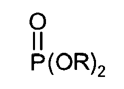 erhalten werden.

Eine Reihe von erfindungsgemäßen Phosphorverbindungen lässt sich herstellen, indem man Phosphonoester der Formel (I) oder der Formel (II) oder ein Gemisch von Phosphonestern der Formel (I) und der Formel (II) mit Alkoholen der Formel R²-OH oder einem Gemisch solcher Alkohole umsetzt. Das genannte Gemisch von Phosphonoestern kann ein Gemisch sein, welches nur zwei oder mehr Verbindungen der Formel (I) enthält oder ein Gemisch, welches nur zwei oder mehr Verbindungen der Formel (II) enthält. Es kann aber auch ein Gemisch sein, welches sowohl eine oder mehrere Verbindungen der Formel (I) und zusätzlich eine oder mehrere Verbindungen der Formel (II) enthält.
Die geeigneten Alkohole der Formel (III), nämlich Alkohole der Formel R²-OH, sind ein- oder mehrwertige Alkohole, die gesättigt oder ungesättigt, linear oder verzweigt sein können und 2 bis 6 Kohlenstoffatome enthalten oder sie sind Polyvinylalkohole. Beispiele solcher Alkohole sind Ethylenglykol, Propylenglykol, Glycerin sowie einwertige Alkohole mit 2 bis 6 Kohlenstoffatomen, z.B. Propanol oder Butanol. Ganz besonders gut geeignete Alkohole der Formel (III) sind Allylalkohol oder Methallylalkohol. Bei deren Umsetzung mit den genannten Phosphonoverbindungen entstehen durch Umesterung Ester, welche olefinische Doppelbindungen enthalten und daher weiteren chemischen Umsetzungen zugänglich sind wie z.B. einer radikalischen Polymerisation oder einer Reaktion mit Polysiloxanen, welche Si-H-Bindungen enthalten.

Andere erfindungsgemäße Phosphorverbindungen sind erhältlich durch Umsetzung von Phosphonoestern der Formel (I) oder der Formel (II) oder den oben genannten Gemischen solcher Verbindungen mit Aminen der Formel (IV), also Aminen der Formel (R³)₂NH oder Gemischen solcher Amine. R³ steht hierin für Wasserstoff oder für einen Rest R, also eine Alkylgruppe mit 1 bis 4 Kohlenstoffatomen, oder für die Allyl- oder Methallylgruppe CH₂=CH-CH₂- oder CH₂=C(CH₃)-CH₂-. Jedoch stehen nicht beide Reste R³ gleichzeitig für Wasserstoff.

Bei der Umsetzung der Phosphonoester der Formel (I) oder der Formel (II) oder von Gemischen solcher Ester mit Alkoholen R²-OH oder Aminen (R³)₂NH ist es bevorzugt, dass die Ausgangsverbindungen in solchen Mengen eingesetzt werden, dass die Summe der Anzahl der -OH-Gruppen in den Verbindungen der Formel (III) oder die Summe der Anzahl der Aminogruppen, also der -NH-Gruppen in den Verbindungen der Formel (IV) ebenso groß ist wie die Summe der Reste OR' in den verwendeten Verbindungen der Formel (1) und der Formel (II).

Die erwähnten Umsetzungen der Phosphonoester mit Alkoholen oder Aminen können nach Methoden durchgeführt werden, wie sie aus der organischen Chemie allgemein bekannt sind. Bei diesen Umsetzungen werden -OR¹-Reste der Phosphonoester durch Reste -OR² oder -N(R³)₂ substituiert.
Es ist von Vorteil und in einigen Fällen sogar erforderlich, bei der Umsetzung einen Katalysator mit zu verwenden. Geeignete Katalysatoren sind aus der chemischen Literatur bekannt. Hierzu zählen unter anderem verdünnte Mineralsäuren. Weitere gut geeignete Katalysatoren sind Alkalimetallhydroxide und Alkalimetallcarbonate oder Gemische dieser Verbindungen. Außerdem können saure Kaliumorthophosphate oder Triethylamin verwendet werden.

Die Umsetzung der Phosphonoester mit Alkoholen R²-OH oder Aminen (R³)₂NH läßt sich auch gut durch geeignete Enzyme katalysieren. Eine enzymatische Katalyse bietet gegenüber einer herkömmlichen Katalyse durch organische oder anorganische Verbindungen in einer Reihe von Fällen den Vorteil, dass die enzymkatalysierte Umsetzung bei niedrigerer Temperatur, also unter schonenderen Bedingungen und selektiver, d.h. unter Bildung einer kleineren Menge von Nebenprodukten ablaufen kann.
Als geeignete Katalysatoren sind hydrolytisch wirkende Enzyme wie Serin-Proteasen oder Hydrolasen oder Proteasen einsetzbar ("Römpp, Chemie-Lexikon", 9. Auflage, 1992, Seite 4362, Georg-Thieme-Verlag Stuttgart-New York). In nahezu wasserfreien organischen Lösungsmitteln wie beispielsweise Benzol oder Toluol sind diese Enzyme in der Lage, die Rückreaktion der Hydrolyse wie z.B. die Synthese von Estern und Amiden zu katalysieren. Als besonders gut geeignet für diese Reaktion haben sich Subtilisine wie "Subtilisin Carlsberg" (E.C. 3.4.21.62) erwiesen.
E.C. 3.4.21.62 ist die sogenannte EC-Nr., eine Klassifizierungsnummer für Enzyme, siehe Römpp-Kompakt, Lexikon Biochemie und Molekularbiologie, Seite 151, Georg-Thieme-Verlag, Stuttgart-New York, 2000.
Subtilisin Carlsberg kann unter der Bezeichnung "Alcalase 1.5 MG, Type FG" von der Firma Novozymes, Dänemark, bezogen werden.
Für die Synthese von Estern und Amiden in organischen Lösungsmitteln wird Subtilisin Carlsberg E.C. 3.4.21.62 erst aktiviert. Ohne Aktivierung findet keine Reaktion statt. Die Aktivierung kann durch Kaliumsalze oder Natriumsalze wie Na- oder K-acetat, -sulfat oder -fluorid erfolgen (siehe Ru et al., 2000, On the salt-induced activation of lyophilized enzymes in organic solvents: effect of salz kosmotropicity on on enzyme activity, J. Am Chem. Soc., 122, 1565-1571). Bevorzugt ist Natriumazetat zu verwenden. Die Aktivierung kann auch durch ein anionisches Tensid wie Natriumdioctylsulfosuccinat erfolgen. Möglichkeiten beider Aktivierungen werden nachfolgend beschrieben.

### Salzaktivierung von Subtilisin:

1 g Subtilisin Carlsberg E.C. 3.4.21.62 wird in 200 ml 2,87 mM (pH=7,8) Phosphatpuffer mit 0,66 mol l⁻¹ Natriumacetat x 3 H₂O gelöst und gefriergetrocknet.
Aktivierung von Subtilisin mittels Sulfobernsteinsäure-bis(2-ethylhexyl)-ester, Natriumsalz (SBSE)
1 g Subtilisin Carlsberg E.C. 3.4.21.62 wird in 20 ml Phosphatpuffer einer Konzentration von 2,87 mmol l⁻¹ (pH=7,8) gelöst. 100 mmol l⁻¹ SBSE wird in 20 ml Toluol gelöst. Beide Lösungen werden in einem Homogenisator (Ultra-Turrax T25, IKA-Labortechnik, Staufen) 5 Minuten bei 15,000 Upm und 0°C intensiv durchmischt. Die stabile, milchig trübe Emulsion wird anschließend gefriergetrocknet.

Das die Umsetzung katalysierende Enzym wird vorzugsweise in Mengen im Bereich von 10 bis 150 mg reinem Enzym pro 100 mmol/l Substrat eingesetzt.

Die Erfindung wird nunmehr durch Ausführungsbeispiele veranschaulicht.

### Beispiel 1

Eine Mischung von
1 g (CH₃O)₂P(O)CH₂CH₂COOCH₃
(= Phosphonoester der Formel (1) mit R = CH₃, R¹ = CH₃, M =-CH₂-CH₂-)
20 g Allylalkohol
0,8 g Natriumcarbonat wurden miteinander vermischt, und die Mischung auf 80°C erwärmt. Das Natriumcarbonat wirkte als Katalysator.
Das Gemisch wurde 6 Stunden unter Rühren bei 80°C gehalten. Während dieser Zeit wurde kontinuierlich bei vermindertem Druck überschüssiger Allylalkohol abdestilliert. Anschließend wurde auf Raumtemperatur abgekühlt, nochmals 20 g Allylalkohol hinzugefügt und nochmals 8 Stunden gerührt. Das hierbei erhaltene Produkt wurde filtriert und überschüssiger Allylalkohol am Rotationsverdampfer abgezogen. Der entstandene Allylester
(CH₃O)₂P(O)CH₂CH₂COOCH₂ CH=CH₂
war von hoher Reinheit (Gaschromatographie).

### Beispiel 2

Enzymkatalysierte (aktiviertes Subtilisin als Enzym) Umsetzung eines Phosphonoesters der Formel (I) mit Alkohol bzw. Amin

### 2a) Umsetzung mit Alkohol

Es wurde eine Lösung von 100 mmol/l Phosphonoester der Formel (I) mit R = R¹=CH₃, M = - CH₂-CH₂- und 850 mmol/l 1-Propanol in 5 ml wasserfreiem Benzol hergestellt. Zu dieser Lösung gab man 1 g Molekularsieb (4 Å, Firma Merck) und aktiviertes Subtilisin Carlsberg E.C. 3.4.21.62, und zwar wurden in einem Versuch 1,9 g des oben genannten mit Natriumacetat aktivierten Subtilisins hinzugefügt, in einem anderen Versuch 0,19 g des oben beschriebenen mit SBSE aktivierten Subtilisins. In beiden Fällen betrug die zugefügte Menge an reinem Subtilisin 0,1 g.
Die beiden erhaltenen Suspensionen wurden 7 Tage in verschlossenen Gefäßen bei 37°C auf einer Schüttelmaschine (70 Upm) inkubiert.

### 2b) Umsetzung mit Amin

Beispiel 2a) wurde wiederholt, wobei jedoch an Stelle von 1-Propanol 1-Propylamin verwendet wurde und die Inkubationszeit nur 2 Tage betrug.

Die gemäß den Beispielen 2a und 2b erhaltenen Produkte wurde anschließend analytisch untersucht. Die analytischen Bestimmungen erfolgten mittels Gaschromatographie (Chrompack Modell 438 A, Kapillarsäule CP-Sil-8 CB, Injektions-, Detektor- und Säulentemperatur 250°C bzw. 280°C bzw. 150°C). Die nachfolgenden Tabellen 1 und 2 zeigen die Ergebnisse, wobei sich Tabelle 1 auf die Umsetzung mit 1-Propanol und Tabelle 2 auf die Umsetzung mit 1-Propylamin bezieht. Die Zahlen in den Tabellen bedeuten Mol %.

### Ferner bedeuten in den Tabellen:

- PPME =: Dimethyl-phosphonopropionsäure-methylester (Ausgangsverbindung)
- PPPE =: Dimethylphosphonopropionsäure-1-propylester
(= Reaktionsprodukt von Beispiel 2a)
- PPPA =: Dimethylphosphonopropionsäure-1-propylamid
(= Reaktionsprodukt von Beispiel 2b)
- Kontrolle =: Blindversuch, unter den gleichen Reaktionsbedingungen, inclusive Inkubation durchgeführt, aber ohne Zusatz von Enzym

**Tabelle 1 (zu Beispiel 2a))**

| | **Kontrolle** | **Na-acetat-aktiviertes Subtilisin** | **SBSE-aktiviertes Subtilisin** |
|---|---|---|---|
| PPME | 96,3 | 75,7 | 63,6 |
| PPPE | 3,7 | 24,3 | 36,4 |

**Tabelle 2 (zu Beispiel 2b))**

| | **Kontrolle** | **Na-acetat-aktiviertes Subtilisin** | **SBSE-aktiviertes Subtilisin** |
|---|---|---|---|
| PPME | 97,6 | 6,3 | 85,0 |
| PPPA | 2,4 | 93,7 | 15,0 |

Man sieht, dass nach der Inkubation auch ohne Zusatz von Enzym (Spalten "Kontrolle") eine kleine Menge PPME zu PPPE bzw. zu PPPA umgesetzt war (3,7 bzw. 2,4 Mol %). In den Versuchen mit Subtilisinzusatz waren die Ausbeuten an den jeweiligen Reaktionsprodukten jedoch deutlich höher als im Fall der Kontrollversuche. Das SBSE-aktivierte Subtilisin begünstigte die Umsetzung mit Propylalkohol stärker als die mit Propylamin. Das mit Natriumacetat aktivierte Subtilisin dagegen begünstigte die Umsetzung mit Propylamin stärker als die mit Propanol.

### Beispiele 3 und 4

### Beispiel 3

### Umesterung von Trimethylphosphonopropionat, katalysiert durch Kaliumphosphat

350 g (CH₃O)₂P(O)CH₂CH₂COOCH₃ werden mit 350 ml Allylalkohol gemischt und 61 g Kaliumphosphat zugegeben. Die Mischung wird auf 80°C erwärmt und ein Unterdruck von 750 - 800 mbar angelegt. Innerhalb von 2 Tagen werden weitere 2 I Allylalkohol zugetropft und gleichzeitig die gleiche Menge zusammen mit Methanol abdestilliert. Nach 2 Tagen wird der Katalysator abfiltriert und die Reaktionsmischung am Rotationsverdampfer eingeengt. Man erhält 386 g eines blassgelben Öls.
300 MHz ¹H-NMR (CDC13 = 7.26 ppm): 5.84 (1 H, ddt), 5.25 (1 H, dd), 5.16 (1 H, dd), 4.51 (1 H, dd), 3.68 (3H, s), 3.63 (3H, s), 2.55 (2H, m), 2.03 (2H, m). 150 MHz ¹³C-NMR: 171.4, 132.0, 118.4, 65.6, 52.7, 52.6, 27.4, 21.1, 19.2. 121 MHz P³¹-NMR: 33.25

### Beispiel 4

### Umesterung von Tetramethylphosphonosuccinat, katalysiert durch wasserfreies Natriumcarbonat

700 g Tetramethylphosphonosuccinat (= Phosphonoester gemäß Formel II von Anspruch 1 mit z = 0, R = CH₃, R¹ = CH₃, X = P(O)(OCH₃)₂) werden in 1,65 I Allylalkohol gelöst und mit 78.4 g Natriumcarbonat (wasserfrei) versetzt. Die Reaktionsmischung wird unter Unterdruck auf 50 - 70°C erwärmt, wobei der Unterdruck so eingestellt wird, dass freiwerdendes Methanol kontinuierlich abdestilliert wird. Frischer Allylalkohol wird kontinuierlich zudosiert. Nach ca. 2 Tagen wird der Katalysator abfiltriert. Nach Abdestillieren des Lösungsmittels am Rotationsverdampfer erhält man eine Mischung aus ca. 80 % bis-Allyl-dimethylphosphonosuccinat und mono-Allyltrimethylphosphonosuccinat/Edukt.
300 MHz ¹H-NMR (CDC13 = 7.26 ppm): 5.86 (2H, m), 5.34 (2H, m), 5.21 (2H, m), 4.60 (4H, m), 3.78 (3H, d), 3.74 (3H, d), 3.50 (2H, m), 3.07 (2H, m), 2.83 (2H, m).
150 MHz ¹³C-NMR: 170.6, 167.8, 131.9, 131.6, 118.8, 118.7, 66.7, 66.0, 53.8, 53.7, 41.9, 40.1, 31.7.
121 MHz P³¹-NMR: 24.25

## Patentansprüche

1. Phosphorverbindungen, herstellbar durch Umsetzung von Phosphonoestern der Formel (I) oder der Formel (II) oder von einem Gemisch von Phosphonoestern der Formel (I) und der Formel (II) 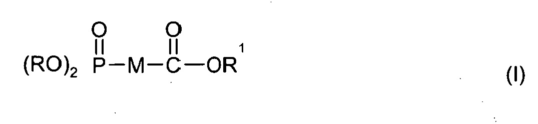 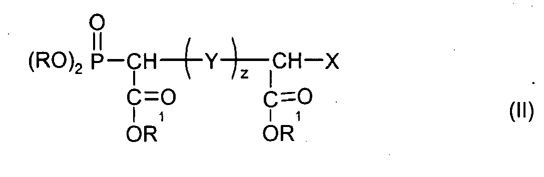 mit Alkoholen der Formel (III) oder Aminen der Formel (IV) oder einem Gemisch von Alkoholen der Formel (III) oder einem Gemisch von Aminen der Formel (IV)
R²-OH (III)
(R³)₂NH (IV)
worin M für einen zweiwertigen gesättigten, linearen oder verzweigten Alkylenrest mit 1 bis 4 Kohlenstoffatomen, vorzugsweise für -CH₂-CH₂ oder für -CH₂-CH(CH₃)- steht,
worin X für H oder für 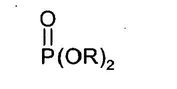 steht,
worin z=0 oder 1 ist und Y für einen Rest M steht oder für einen Rest M, in welchem ein Wasserstoffatom durch einen Rest 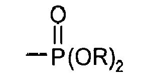 substituiert ist,
worin alle anwesenden Reste R unabhängig voneinander für eine Alkylgruppe mit 1 bis 4 Kohlenstoffatomen, vorzugsweise für -CH₃, stehen,
alle anwesenden Reste R¹ unabhängig voneinander für -CH₃ oder für -CH₂-CH₃ stehen,
worin R²-OH ein ein- oder mehrwertiger gesättigter oder ungesättigter Alkohol mit 2 bis 6 Kohlenstoffatomen oder Polyvinylalkohol ist,
wobei alle anwesenden Reste R³ für R oder für H oder für
CH₂=C(R⁴)-CH₂-
stehen, jedoch höchstens einer der Reste R³ für H steht,
worin R⁴ für H oder für CH₃ steht.

2. Phosphorverbindungen nach Anspruch 1, **dadurch gekennzeichnet, dass** R²-OH Allylalkohol oder Methallylalkohol ist.

3. Phosphorverbindungen nach Anspruch 1 oder 2, **dadurch gekennzeichnet, dass** die Ausgangsverbindungen in solchen Mengen eingesetzt werden, dass die Summe der Anzahl der -OH-Gruppen in den Verbindungen der Formel (III) oder die Summe der Anzahl der - Aminogruppen in den Verbindungen der Formel (IV) ebenso groß ist wie die Summe der Reste OR¹ in den verwendeten Verbindungen der Formel (I) und der Formel (II)

4. Phosphorverbindungen nach einem oder mehreren der Ansprüche 1 bis 3, **dadurch gekennzeichnet, dass** bei der Umsetzung ein Katalysator verwendet wird.

5. Phosphorverbindungen nach Anspruch 4, **dadurch gekennzeichnet, dass** als Katalysator ein Enzym verwendet wird.

6. Phosphorverbindungen nach Anspruch 5, **dadurch gekennzeichnet, dass** als Katalysator ein Subtilisin verwendet wird.

7. Phosphorverbindungen nach Anspruch 4, **dadurch gekennzeichnet, dass** als Katalysator ein Alkalimetallhydroxyd oder ein Alkalimetallcarbonat oder ein Gemisch dieser Verbindungen verwendet wird.

8. Phosphorverbindungen nach einem oder mehreren der Ansprüche 1 bis 7, **dadurch gekennzeichnet, dass** anschließend an die Umsetzung der Ester der Formel (I) oder Formel (II) mit Alkoholen oder Aminen die erhaltenen Produkte weiter umgesetzt werden, wobei diese weitere Umsetzung entweder
a) eine Umsetzung mit einem Polyorganosiloxan ist, das Si-H-Bindungen enthält, oder
b) eine radikalische Polymerisation ist, oder
eine Umsetzung mit Cellulosemolekülen ist, oder
eine Umsetzung mit Wollematerialien ist, oder
eine Umsetzung mit einem Alkohol der Formel (V) ist
R⁵-T-OH (V)
worin R⁵ ein einwertiger heterocyclischer Rest ist, der ein oder mehrere Stickstoffatome enthält und worin T für einen linearen oder verzweigten, gesättigten oder ungesättigten zweiwertigen Kohlenwasserstoffrest mit 1 bis 4 Kohlenstoffatomen steht.

9. Phosphorverbindungen nach Anspruch 8, **dadurch gekennzeichnet, dass** R⁵ ein einwertiger Rest ist, der sich von Adenin (1H-Purin-6-amin) durch Entfernung des Wasserstoffatoms ableitet, das sich an der Aminogruppe des 5-Rings befindet.
